# EUROPEAN PATENT APPLICATION

(11) **EP 1 551 001 A2**
(43) Date of publication of application: **06.07.2005**
(21) Application number: 04014141.8
(22) Date of filing: 16.06.2004
(51) Int. Cl.: G09G 3/34

(54) **Apparatus and method for operating and controlling display and backlight in portable terminals**

(30) Priority: 05.01.2004 KR 2004000379
(71) Applicant: Bellwave Co., Ltd., Seoul 135-270 (KR)
(72) Inventor: Yang, Ki-Gon, Seocho-Gu Seoul (KR); Kang, Jeffrey-Han, Seocho-Gu Seoul (KR); Shin, Ki-Yeong 102-1002 Boramaeparkvill Apt., Dongjak-Gu, Seoul (KR); Park, Hyun-Chul 805-1004 Deungchonjugong Apt., Gangseo-Gu, Seoul (KR)
(74) Representative: Grünecker, Kinkeldey, Stockmair & Schwanhäusser Anwaltssozietät

(57) **Abstract**

The present invention relates to an apparatus and a method for operating and controlling a display and a backlight in the portable terminals, and more particularly, to an apparatus and a method for controlling the backlight and the display without a key input. The present invention the steps of: generating a sensing signal and transmitting the sensing signal to a control means, wherein the sensing signal is issued by an action taken by a user; receiving the sensing signal in the control means and generating a control signal; and turning on a backlight in response to the control signal. Accordingly, an unnecessary key input is removed in turning on the backlight and in rotating the output pattern of the phone.

## Description

### Field of the Invention

The present invention relates to an apparatus and a method for operating and controlling a display and a backlight in the portable terminals, such as a hand-held phone, a smart phone and a PDA (personal digital assistant), and more particularly, to an apparatus and a method for controlling the backlight and the display without a key input.

### Description of Related Arts

In a conventional method for driving a display in the portable terminals, a backlight of the display is turned off in order to save the battery power consumption when there is no key input for a predetermined period of time after the display had been driven: Also, when brightness around the portable terminal is less than a predetermined value, the backlight is turned on to show the display clearly.

However, since the method for driving the backlight, which is dependant on the brightness in environments, needs a drivability of a sensor to detect the brightness, another power consumption is caused. Accordingly, the power save is not effective. In the case where the backlight is turned off when there is no key input for a predetermined period of time after driving the display, there is a shortcoming in that a user must take such a key input. That is, the user should take a key input involved in an event to turn on the backlight when the backlight is turned off during the hand-held phone operation. In this case, an unnecessary key input is required to turn on the backlight and this key input makes a character inputted or a current mode changed.

With the devolvement of different functions in the hand-held phones, moving pictures and still images are frequently shown on a display panel, such as a LCD panel. However, being different from general TV display panels having a 4:3 or 16:9 aspect ratio, the shape of the display panel in the hand-held phone has a longer perpendicularity than horizontality. When a picture is shown on the LCD panel in the portable terminal, left and right portions of the picture are not shown or the whole size of the picture is diminished. To solve this problem, a method for rotating a folder where the display panel is installed has been used; however, it is necessary to have a plurality of the user's key inputs.

### Summary of the Invention

An object of the present invention is to provide an apparatus and a method for driving and/or controlling a backlight in the portable terminals, such as a hand-held phone, a smart phone and a PDA (personal digital assistant) , without a user's key input.

Another object of the present invention is to provide an apparatus and a method for changing the direction of an output pattern of the display in the portable terminals, such as a hand-held phone, a smart phone and a PDA (personal digital assistant), without a user's key input.

According to an aspect of the represent invention, there is provided an apparatus a method for controlling a backlight of a portable terminal comprising the steps of: generating a sensing signal and transmitting the sensing signal to a control means, wherein the sensing signal is issued by an action taken by a user; receiving the sensing signal in the control means and generating a control signal; and turning on a backlight in response to the control signal.

According to another aspect of the represent invention, there is provided amethod for controlling a backlight of a portable terminal comprising the steps of: a) detecting a movement of the portable terminal; b) detecting whether a current operating mode of a display is an image output mode or not after detecting the movement of the portable terminal; c) detecting whether a backlight is turned off or not if the current operating mode is an image output mode at step b) ; d) turning on the backlight if the backlight is turned off at step c); e) rotating an output pattern of the display if the backlight is turned on at step c) ; and f) turning on the backlight if the current operating mode is not the image mode at step b).

According to still another aspect of the represent invention, there is provided a method for controlling a backlight of a portable terminal comprising the steps of: 1) detecting a movement of the portable terminal; 2) detecting whether a backlight is turned off if the movement of the portable terminal is sensed; 3) turning on the backlight if the backlight is turned off at step 2); and 4) rotating an output pattern of a display of the portable terminal if the backlight is turned on at step 2) .

According to still another aspect of the represent invention, there is provided a portable terminal for controlling a backlight comprising: a control means for controlling the backlight, wherein the backlight is turned on or turned off in response to a control signal from the control means; and a sensing means for generating a sensing signal and transmitting the sensing signal to the control means, wherein the sensing signal is issued by an action taken by a user and wherein the control signal is issued based on the sensing signal.

### Brief Description of the Drawings

The above and other objects and features of the present invention will become apparent from the following description of the preferred embodiments given in conjunction with the accompanying drawings, in which:

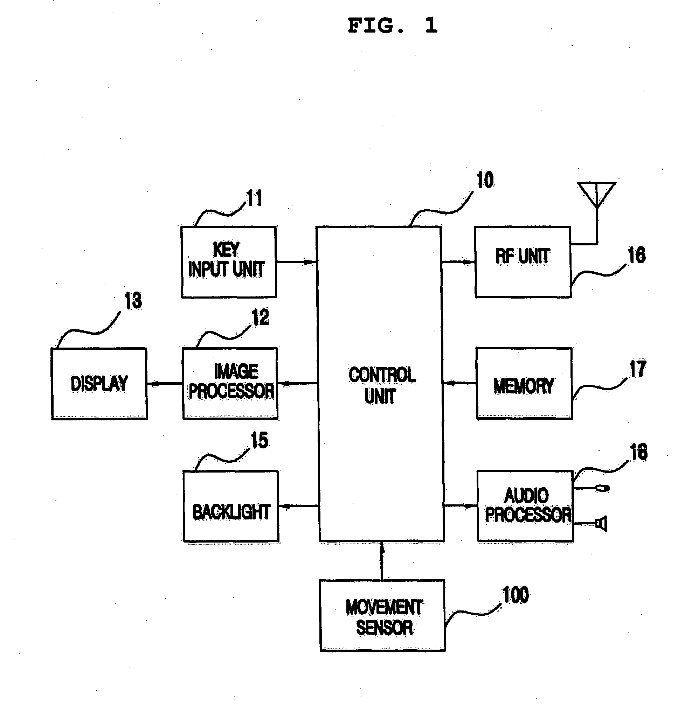

Fig. 1 is a schematic view illustrating a hand-held phone according to the present invention;
Fig. 2 is a perspective view illustrating a movement sensor built in the hand-held phone of the present invention;
Fig. 3 is a flow chart illustration a method for controlling a backlight and for rotating an output pattern of a display in the phone according to one embodiment of the present invention; and
Fig. 4 is a flow chart illustration a method for controlling a backlight and for rotating an output pattern of a display in the phone according to another embodiment of the present invention.

### Detailed Description of the Preferred Embodiment of the Invention

Hereinafter, the present invention will be described in detail referring to the accompanying drawings.

Referring to Fig, 1, a hand-held phone (hereinafter, referred to as "phone") according to the present invention includes a key input unit 11, an image processor 12, a display 13, a backlight 15, a RF (radio frequency) unit 16, a memory 17, an audio processor 18, a movement sensor 100 and a control unit 10.

The whole operation of the hand-held phone, according to the present invention, is controlled by the control unit 10. Particularly, the hand-held phone controls the display 13 and the backlight 15 via the movement sensor 100. That is, based on the detecting signal from the movement sensor 100, an image is outputted in the direction of the longer or shorter dimension of the display and also the backlight 15 is turned on by the detecting signal from the movement sensor 100.

The key input unit 11 has a plurality of keys which are correspondent to characters and functions. The image processor 12 controls the display 13 in response to a control signal from the control unit 10 and the control signals from the control unit 10 are used to determine the direction of the output pattern of the display 13. In the present invention, the display output data can be rotated in response to the control signal from the control unit 10.

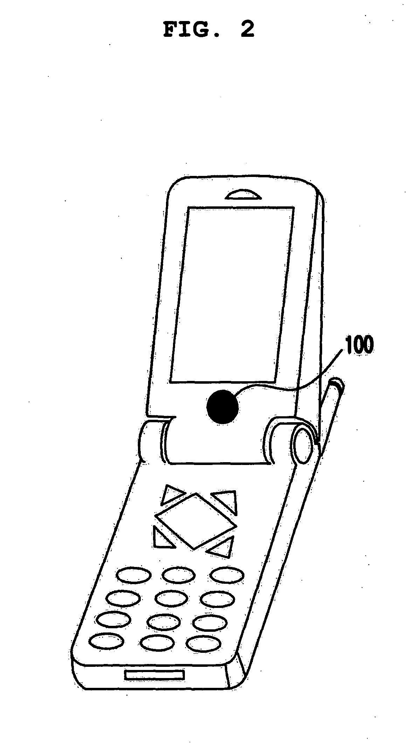

The movement sensor 100 of the present invention is employed to drive the backlight 15 and to provide a sensing signal for the control unit 10 and may be one of an acceleration sensor and a vibration senor (Fig. 2) . Although the movement sensor 100 is located at the bottom center of the upper folder in Fig. 2, it can be located at any position of the hand-held phone. The control unit 10 controls the backlight 15 and the output pattern of the display 13 in response to the detected signal form the movement sensor 100.

In similar to a RF circuit in the typical hand-held phone, the RF unit 16 demodulates receiving signals from an antenna, modulates input signals from the control unit 10, and then transmits the modulated signal through the antenna. The memory 17 stores various kinds of data, such as phone operating data and communication data and the audio processor 18 controls a speaker and a microphone connected thereto.

The display 13, such as an LCD panel, outputs texts, images and moving pictures in response to a control signal from the image processor 12. In the typical dual folder type phone, the display is located at the upper folder and the display panel is located in the direction of the longer dimension so that users cannot show the pictures in the general aspect ratios which is applied to TVs, computer monitors or other information terminals.

In the present invention, the output pattern of the display is changeable. That is, the backlights 15 of the display 13 and the key input unit 11 are turned on by the sensing signal, which are detected by the movement sensor 100 in the phone, or the output pattern of the display 13 is rotated by the sensing signal. Generally, the backlight 15, as a light source of the display 13 and the key input unit 11, is turned on when a call processing for telecommunication or an additional function is carried out in order to make it possible to operate the phone. Further, the backlight 15 is turned off after a predetermined period of time to save battery power.

In case where the backlight 15 is turned off, an arbitrary key input must be carried out to turn on again the backlight 15 of the display 13 and the key input unit 11. However, the arbitrary key input causes to turn on the backlight 15 makes a current mode changed or an unnecessary character inputted so that it is necessary to correct the changed mode or the inputted character.

In the present invention, the backlight 15 is turned on without an additional key input in case where the backlight 15 is turned off. The backlight 15 is turned on by a sensing signal which is detected by a sensor built in the phone. The movement sensor 100, such as an acceleration sensor or a vibration sensor, of the present invention is provided and the backlight 15 is turned on based on the variation of the sensing signal from the movement sensor 100.

In a sate of the backlight-turn-off, the user slightly shakes the phone in front and in the rear or left and right and the movement sensor 100 detects such a movement of the phone. In case of the acceleration sensor, an acceleration variation is sensed and, in case of the vibration sensor, the vibration is sensed. The sensed signal is transmitted to the control unit 10 and the control unit 10 turns on the backlight 15. The unnecessary key input to make the user inconvenient can be removed by turning on the backlight 15 using the shake of the phone.

When still and moving pictures are checked up on a display of the conventional hand-held phones or a menu (ormode) is reviewed, some portions of the picture are not shown or the whole size of the picture is diminished because the perpendicular height of the display is longer than the horizontal width of that. If the output pattern of the display is changed into a horizontal mode, it is possible to provide a wider picture on a limited and fixed screen of the display panel. An amount of the variation in the movement sensor 100 of the present invention can be used as a control signal to change the output pattern of the display.

This change of the output pattern of the display can be made on still pictures as well as moving pictures. Also, the output patterns of a background picture, a calendar, a schedule; a menu, and so on can be changed. In case where the user wants to change the output pattern of the display, the user slightly shakes the phone in front and in the rear or left and right and then the movement sensor 100 detects such a movement of the phone and generates a sensing signal. This sensing signal is transmitted to the control unit 10 and the control unit issues a command signal to the image processor 12. In similar to the backlight 15, the detection of the movement of the phone is achieved by an amount of variation of the movement, for example, an amount of variation in acceleration and vibration.

The method for rotating the output pattern of the display can be implemented by hardware or software. In the hardware rotation, two memories can be employed. One of them stores image data in a direction of vertical output pattern of the display 13 and the other stores image data in a direction of horizontal output pattern of the display 13. One of two memories is selectively used to display the output pattern in response to the sensing signal from the movement sensor 100. In the software rotation, the image processor 12 controls the display 13 and the memory 17 in order that the output from the memory 17 is in compliance with the horizontal or vertical pattern.

If the control unit 10 is susceptive to the output variation of the movement sensor 15, it may be very difficult to control the output pattern of the display 13. Accordingly, critical value can be set up for processing the sensing signal which is used for turning on the backlight 15 and for rotating the output pattern of the display appropriately. Namely, the backlight-on and the output pattern rotation are carried out only if the amount of the sensed value is over the critical value. The critical value is selected in a degree to which the phone is not exceedingly susceptible to the amount of variation in acceleration and vibration.

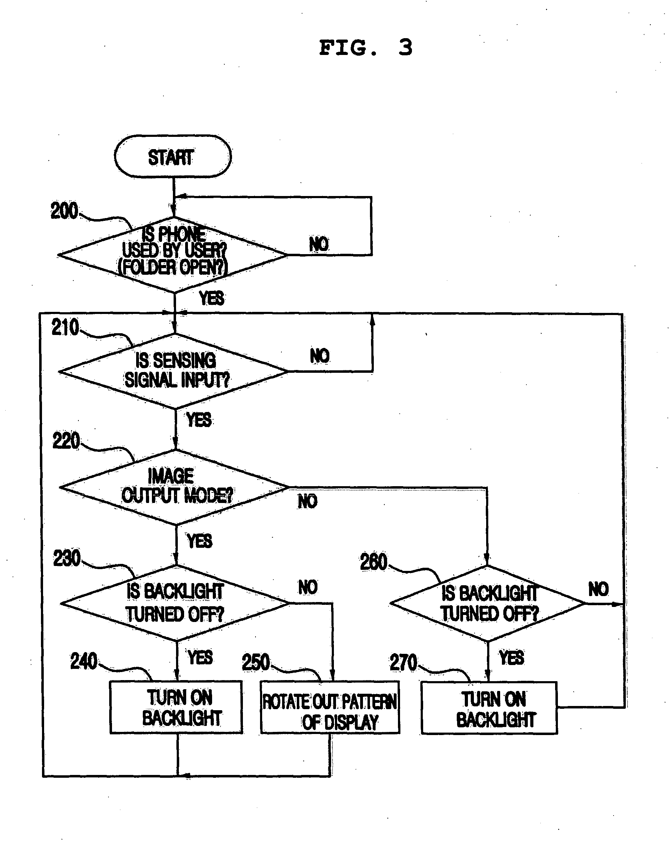

Referring to Fig. 3 illustrating a method for controlling the display 13 and the backlight 15, at step 200, the control unit 10 repeatedly detects whether the hand-held phone is now used by a user. For example, in a folder type phone, the control unit 10 detects whether the folder is open or not. At step 210, the control unit 10 repeatedly detects whether a movement is sensed by the movement sensor 100.

When the movement is sensed by the movement sensor 100 and the sensing signal is over the predetermined critical value, the control unit 10 detects whether the current mode is the image output mode or not at step 220. That is, the control unit 10 detects whether the current mode is outputting the image or a moving picture at step 220. When the current mode is the image output mode, the control unit 10 detects whether the backlight 15 is turned off or turned on at step 230. When the backlight 15 is turned off, the control unit 10 turns on the backlight 15 at step 240. If the backlight 15 is turned on at step 230, the control unit 10 rotates the output pattern of the display at step 250.

On the other hand, the current mode is not the image output mode at step 220, the control unit 10 repeatedly detects whether the backlight 15 is turned off or turned on at step 260. If the backlight 15 is turned off, the control unit 10 turns on the backlight 15.

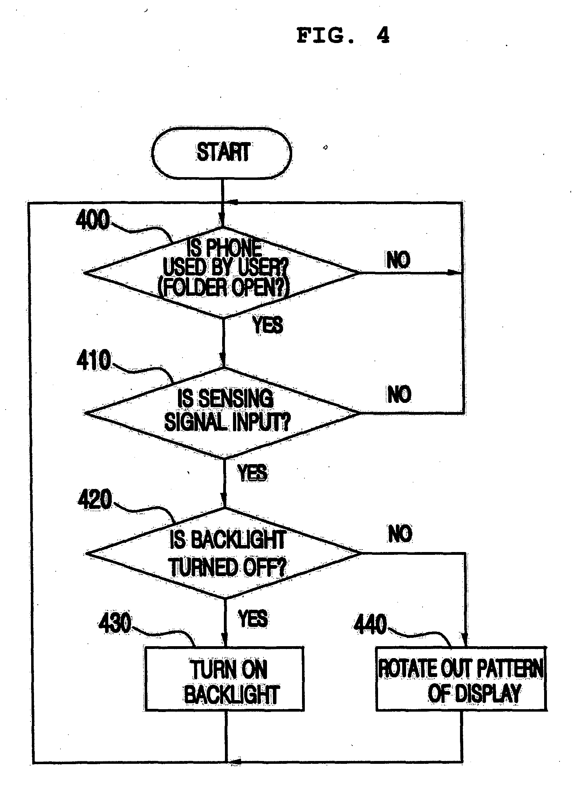

Fig. 4 illustrates another method for controlling only the backlight 15, which is applied to all operating modes in the phone. At step 400, the control unit 10 detects whether the hand-held phone is now used by the user. For example, in a folder type phone, the control unit 10 repeatedly detects whether the folder is open or not. At step 410, the control unit 10 repeatedly detects whether the movement sensor 100 senses a movement of the phone. When the movement of the phone is detected, the control unit 10 detects whether the backlight 15 is turned off or turned on at step 430.

If the backlight 15 is turned off at step 420, the control unit 10 turns on the backlight 15 at step 430. If the backlight 15 is turned on at step 420, the control unit 10 rotates the output pattern of the display at step 440.

As apparent from the above, in the present invention, the backlight is turned on by an action which is taken by the user and the output pattern is also rotated by an action which is taken by the user when the backlight has been already turned on. The operation for turning on the backlight and for rotating the output pattern of the phone is achieved only by an action taken by the user without a key input. Accordingly, an unnecessary key input is removed in turning on the backlight and in rotating the output pattern of the phone.

## Claims

1. A method for controlling a backlight of a portable terminal comprising the steps of:
generating a sensing signal and transmitting the sensing signal to a control means, wherein the sensing signal is issued by an action taken by a user;
receiving the sensing signal in the control means and generating a control signal; and
turning on a backlight in response to the control signal.

2. The method in accordance with claim 1, wherein the sensing signal is issued by a sensing means and wherein the sensing means is an acceleration sensor or a vibration senor which generates the sensing signal which is caused by the action taken by the user.

3. A method for controlling a backlight of a portable terminal comprising the steps of:
a) detecting a movement of the portable terminal;
b) detecting whether a current operating mode of a display is an image output mode or not after detecting the movement of the portable terminal;
c) detecting whether a backlight is turned off or not if the current operating mode is an image output mode at step b) ;
d) turning on the backlight if the backlight is turned off at step c);
e) rotating an output pattern of the display if the backlight is turned on at step c); and
f) turning on the backlight if the current operating mode is not the image mode at step b).

4. The method in accordance with claim 3, wherein the sensing signal is issued by a sensingmeans and wherein the sensing means is an acceleration sensor or a vibration senor which generates the sensing signal which is caused by the action taken by the user.

5. The method in accordance with claim 3, wherein the step of rotating the output pattern of the display is made by two memories, one of which stores image data in a direction of vertical output pattern of the display and the other of which stores image data in a direction of horizontal output pattern of the display.

6. The method in accordance with claim 3, wherein the step of rotating the output pattern of the display is made by a programwhich selectively outputs data in a direction of vertical output pattern of the display or horizontal output pattern of the display.

7. A method for controlling a backlight and an output pattern of a display of a portable terminal comprising the steps of:
1) detecting a movement of the portable terminal;
2) detecting whether a backlight is turned off if the movement of the portable terminal is sensed;
3) turning on the backlight if the backlight is turned off at step 2); and
4) rotating the output pattern of the display of the portable terminal if the backlight is turned on at step 2).

8. A portable terminal for controlling a backlight comprising:
a control means for controlling the backlight, wherein the backlight is turned on or turned off in response to a control signal from the control means; and
a sensing means for generating a sensing signal and transmitting the sensing signal to the control means, wherein the sensing signal is issued by an action taken by a user and wherein the control signal is issued based on the sensing signal.

9. The apparatus in accordance with claim 8, wherein the sensing means is an acceleration sensor or a vibration senor which generate a sensed value through a movement of the portable terminal which is caused by the action taken by the user.

10. The apparatus in accordance with claim 8, further comprising:
two memories, one of which stores image data in a direction of vertical output pattern of a display and the other of which stores image data in a direction of horizontal output pattern of the display; and
a controller for selectively outputting one from the vertical output pattern and the horizontal output pattern in response to the sensing signal.
